Europäisches Patentamt

European Patent Office

Office européen des brevets

(11) Veröffentlichungsnummer: **0 133 306**
**B1**

(12) **EUROPÄISCHE PATENTSCHRIFT**

(45) Veröffentlichungstag der Patentschrift:
**15.10.86**

(21) Anmeldenummer: **84108911.3**

(22) Anmeldetag: **27.07.84**

(51) Int. Cl.⁴: **F 03 B 1/02**

(54) **Laufrad für eine Durchströmturbine.**

(30) Priorität: **29.07.83 DE 3327456**

(43) Veröffentlichungstag der Anmeldung:
**20.02.85 Patentblatt 85/8**

(45) Bekanntmachung des Hinweises auf die Patenterteilung:
**15.10.86 Patentblatt 86/42**

(84) Benannte Vertragsstaaten:
**AT CH DE FR GB IT LI**

(56) Entgegenhaltungen:
**DE-C-353 723**
**DE-C-833 180**
**FR-A-2 484 549**

(73) Patentinhaber: **Ossberger- Turbinenfabrik GmbH &
Co, Otto- Rieder- Strasse 7, D-8832 Weissenburg
(DE)**

(72) Erfinder: **Ossberger, Karl- Friedrich, Dr., Otto-
Rieder- Strasse 3, D-8832 Weissenburg (DE)**
Erfinder: **Partzsch, Peter, Am Bergwaldtheater 4,
D-8832 Weissenburg (DE)**

(74) Vertreter: **Dipl.- Ing. H. Hauck Dipl.- Phys. W.
Schmitz Dipl.- Ing. E. Graalfs Dipl.- Ing. W.
Wehnert Dr.- Ing. W. Döring, Mozartstrasse 23,
D-8000 München 2 (DE)**

**Beschreibung**

Die Erfindung betrifft ein Laufrad für eine Durchströmturbine, das radial von außen nach innen und dann radial von innen nach außen durchströmt wird, mit einem Kranz von profilierten Schaufeln sowie mit zwei endseitigen Stirnscheiben und mindestens einer axial dazwischen liegenden Verbindungsscheibe, die in radialen Ebenen auf einer Welle angeordnet und radial außen mit entsprechend den Schaufelprofilen geformten Schlitzen zur Aufnahme der Schaufeln versehen sind.

Schaufelräder dieser Gattung sind z.B. in DE-A 632.928 und 833.180 gezeigt und werden von der Anmelderin seit vielen jahren in der Praxis hergestellt. Je nach axialer Länge des Schaufelrades müssen eine oder mehrere (z.B. mehr als 10) Verbindungsscheiben zur gleichmäßigen Übertragung der Teilkräfte auf die Gesamtbeschaufelung vorgesehen werden. Haben die kreisförmig ausgebildeten Verbindungsscheiben einen solchen Außenumfang, daß sie sich radial bis zu den Eintrittskanten der Schaufeln erstrecken, so entstehen sehr kleine Spalte zwischen den Verbindungsscheiben und den angrenzenden Gehäusewänden. Kleine Spalte sind jedoch im Hinblick auf Kavitationsprobleme unerwünscht.

Man ist daher in der Praxis dazu übergegangen, den Außendurchmesser der kreisförmig ausgebildeten Verbindungsscheiben zu verringern, so daß die Schaufeln um einen bestimmten Betrag radial nach außen über den Außenumfang der Verbindungsscheiben vorstehen. Dies bringt jedoch sowohl im Hinblick auf das Festigkeitsverhalten wie auch auf die Strömungsverhältnisse Schwierigkeiten mit sich. So kann es unter ungünstigen Bedingungen zu einem Abreißen der überstehenden Schaufelspitzen kommen. Auch im Hinblick auf das Schwingungsverhalten des Laufrades sind die überstehenden Schaufelspitzen ungünstig. Ferner stellen die Schweißnähte, die durch Schweißverbindungen zwischen den Schaufeln und den Verbindungsscheiben entstehen, Strömungshindernisse dar. Dies gilt insbesondere für die Schweißnähte auf den Druckseiten der Schaufeln, da dort die im Inneren des Schaufelrades liegenden Schweißnähte von außen praktisch nicht mehr für eine Nachbearbeitung zugänglich sind.

Der Erfindung liegt die Aufgabe zugrunde, ein Laufrad für eine Durchströmturbine der eingangs angegebenen Gattung so auszubilden, daß sowohl das statische wie auch dynamische Festigkeitsverhalten des Laufrads sowie die Strömungsverhältnisse in den Schaufelkanälen verbessert werden.

Diese Aufgabe wird bei einem Laufrad mit den eingangs angegebenen Merkmalen erfindungsgemäß dadurch gelöst, daß die zwischen den Schlitzen liegenden Zwischenabschnitte der Verbindungsscheibe an ihren Außenrändern im Bereich der Schaufelsaugseiten gegenüber ihren Außenrändern im Bereich der Schaufeldruckseiten radial nach innen versetzt ausgebildet sind.

Durch den radialen Versatz der Außenränder der Zwischenabschnitte wird erreicht, daß die Schaufeln auf ihren Druckseiten über ihrer gesamten Länge abgestützt werden, ohne daß jedoch die Verbindungsscheibe an ihrem Außenumfang einen durchgehenden engen Spalt mit den angrenzenden Gehäusewänden bildet. Es ergibt sich somit eine deutliche Verbesserung des statischen und dynamischen Festigkeitsverhaltens des Schaufelrads. Ein Abreißen der Schaufelspitzen ist praktisch ausgeschlossen, und auch die Schwingungsanfälligkeit des Schaufelrades ist erheblich gemindert. Da ferner aufgrund der erfindungsgemäß vorgeschlagenen Ausbildung der Verbindungsscheibe die Schweißnähte zwischen den Schaufeln und der Verbindungsscheibe im Eintrittsbereich der Schaufeln von außen leicht zugänglich sind, können sie im Sinne einer Verringerung der Einströmverluste nachträglich bearbeitet werden. Es ergibt sich somit - insbesondere bei einer größeren Anzahl von Verbindungsscheiben - eine Verbesserung des Strömungswirkungsgrades.

Das dynamische Festigkeitsverhalten wie auch die Strömungsverhältnisse im Schaufelkanal lassen sich ferner dadurch verbessern, daß die Schaufeln bezüglich einer sie schneidenden Axialebene geringfügig (z.B. um ungefähr 2°) schräg gestellt werden. Hierdurch wird der Strömung im Schaufelkanal ein vorgegebener Drall überlagert, so daß sich in sämtlichen Schaufelkanälen das gleiche definierte Strömungsverhalten ergibt. Die Schwingungsanfälligkeit des Schaufelrades wird dadurch verringert, und auch die Strömungsverluste dürften sich hierdurch herabsetzen lassen.

Weitere vorteilhafte Ausgestaltungen der Erfindung gehen aus den Unteransprüchen hervor.

Anhand der Zeichnungen wird ein Ausführungsbeispiel der Erfindung erläutert. Es zeigt:

Figur 1 eine perspektivische Darstellung eines Laufrades für eine Durchströmturbine;

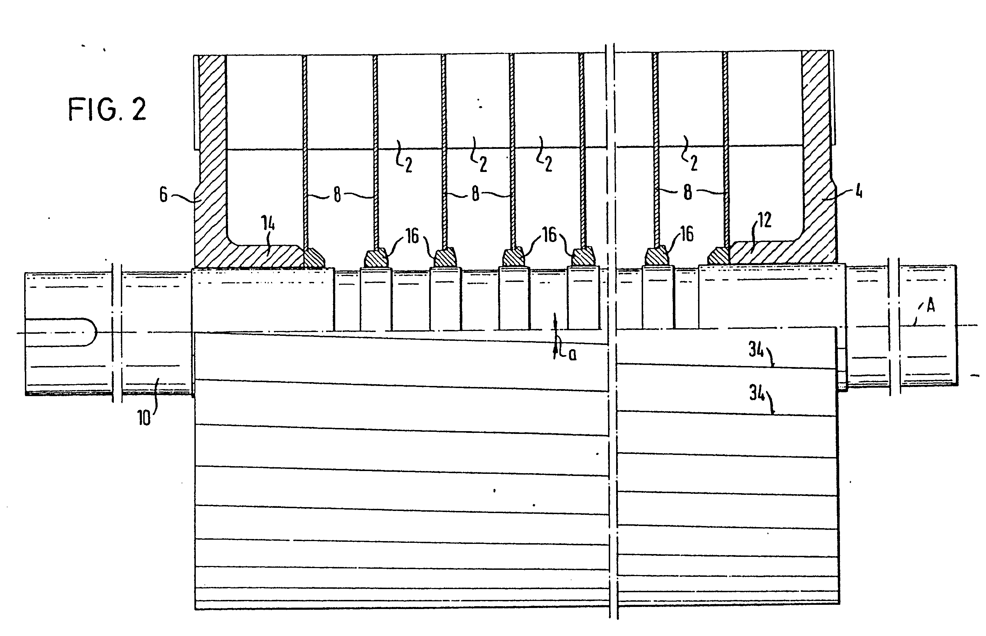

Figur 2 eine Seitenansicht des Laufrades nach Figur 1, wobei die obere Hälfte des Laufrades geschnitten dargestellt ist;

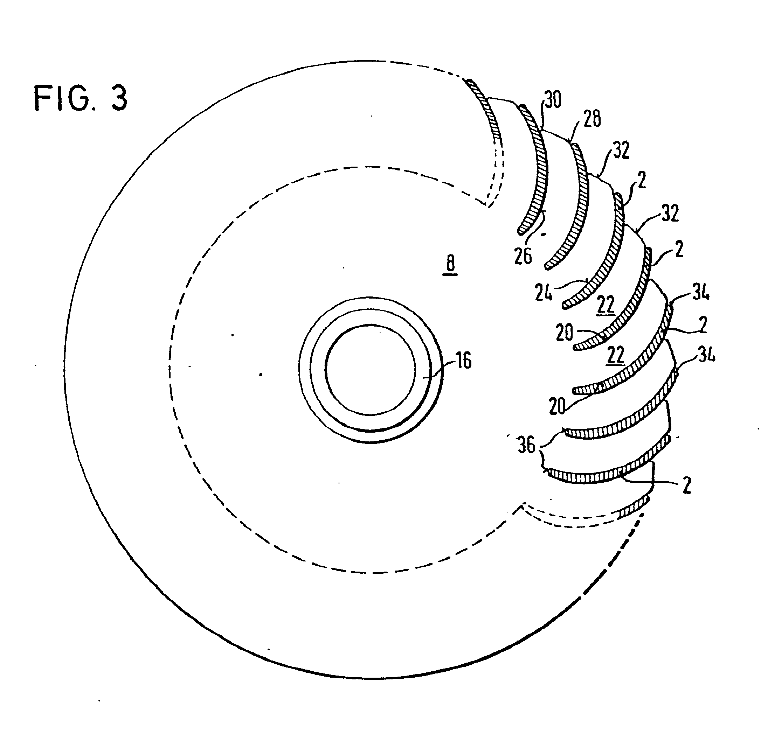

Figur 3 eine Seitenansicht einer Verbindungsscheibe des Laufrades nach den Figuren 1 und 2.

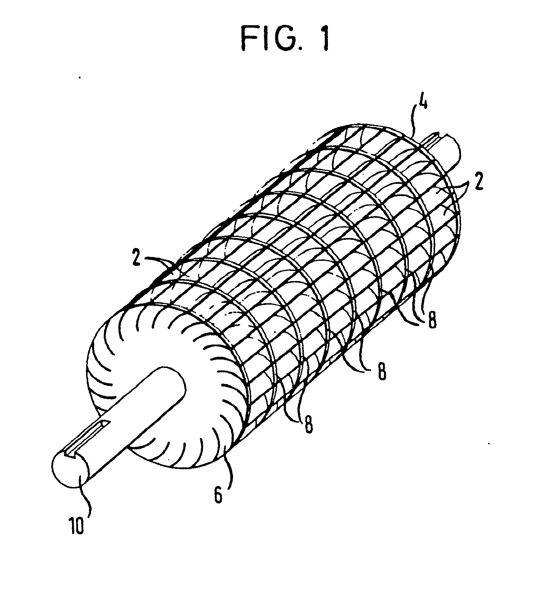

Wie in Fig. 1 zu sehen, besitzt das walzenförmig ausgebildete Laufrad einer (im übrigen nicht dargestellten) Durchströmturbine einen Kranz von Schaufeln 2, die über endseitig angeordnete Stirnscheiben 4 und 6 sowie axial dazwischen liegende Verbindungsscheiben 8 mit einer durchgehenden Welle 10 verbunden sind. Die Stirnscheiben 4, 6 und die Verbindungsscheiben 8 liegen in radialen 8. Laufrad nach Anspruch 7, dadurch gekennzeichnet, daß die Schrägstellung so gewählt ist, daß die Vorderund Hinterkanten (34, 36) jeder Schaufel (2) mit einer sie schneidenden Axialebene (A) einen Winkel von ungefähr 1° bis 4°, vorzugsweise 2° einschließen.

9. Laufrad nach einem der vorhergehenden Ansprüche, dadurch gekennzeichnet, daß die Schaufeln (2) die Form einfacher Kreisbogenprofile haben.

## Claims

1. Impeller for a cross-flow turbine having a flow pattern such that fluid flows therethrough radially from the outside to the inside and then radially from the inside to the outside, comprising a ring of profiled vanes and a pair of end discs at the ends and at least one axially interposed connecting disc arranged in radial planes on a shaft and provided radially outside with slots formed matingly to the vane profiles for receiving the vanes, characterized in that the intermediate portions (22) of the connecting disc (8) situated between the slots (20) are radially inwardly offset at their outer edges (30) in the region of the suction sides (26) of the vanes relative to their outer edges (28) in the region of the pressure sides (24) of the vanes.

2. Impeller according to claim 1, characterized in that the radial offset is approximately 1/3 to 1/5 of the vane length, preferably 1/4 of the vane length.

3. Impeller according to claim 1 or 2, characterized in that the intermediate portions (22) extend radially outwardly up to the front edges (34) of the vanes (2) in the region of the pressure sides (24) of the vanes.

4. Impeller according to any of the preceding claims, characterized in that the end discs (4, 6) and the connecting disc (8) are connected to the vanes (2) by welding.

5. Impeller according to any of the preceding claims, characterized in that the end discs (4, 6) are connected to the shaft (10) via hubs (12, 14) shrinked onto the shaft (10).

6. Impeller according to any of the preceding claims, characterized in that the connecting disc (8) is loosely mounted on the shaft (10).

7. Impeller according to any of the preceding claims, characterized in that the slots (20) of the end discs (4, 6) and of the connecting disc (8) are disposed such that the vanes (2) are slightly inclined in a longitudinal direction.

8. Impeller according to claim 7, characterized in that the inclination is selected such that the front and rear edges (34, 36) of each vane (2) include an angle of about 1° to 4°, preferably 2°, with an axial plane (A) intersecting it.

9. Impeller according to any of the preceding claims, characterized in that the vanes (2) are of simple circular arc profile shape.

## Revendications

1) Rotor pour turbine radiale qui est traversé par un fluide d'abord en direction radiale de l'extérieur vers l'intérieur et ensuite, en direction radiale de l'intérieur vers l'extérieur et qui comporte une couronne de pâles profilées et deux flasques d'extrémités opposées ainsi qu'au moins un disque de liaison intermédiaire qui comporte des fentes situées sur un plan radial d'un arbre s'étendant radialement vers l'extérieur et dont la configuration correspond à celle des pâles pour recevoir ces dernières, caractérisé en ce que les parties intermédiaires (22) disposées entre les fentes (20) du disque intermédiaire (8) sont décalées radialement vers l'intérieur par les bords extérieurs (30) situés du côté des faces d'aspiration (26) des pâles par rapport aux bords extérieurs (28) situés du côté des faces de pression (24) des pâles.

2) Rotor suivant la revendication 1, caractérisé en ce que ledit décalage radial est de l'ordre de 1/3 à 1/5 de la longeur des pâles et de préférence de 1/4 de la longeur des pâles.

3) Rotor suivant l'une quelonque des revendications 1 ou 2, caractérisé en ce que les parties intermédiaires (22) s'étendent du côté de pression (24) des pâles radialement vers l'extérieur jusqu'aux bords d'attaque (34) des pâles (2).

4) Rotor suivant l'une quelonque des revendications précédentes caractérisé en ce que les flasques d'extrêmité (4, 6) et les disques de liaison (8) sont reliés aux pâles (2) par soudage.

5) Rotor suivant l'une quelonque des revendications précédentes, caractérisé en ce que les flasques d'extrêmité (4, 6) sont fixées sur l'arbre (10) à l'aide de moyeux (12, 14) réalisés par frottage sur l'arbre (10).

6) Rotor suivant l'une quelonque des revendications précédentes, caractérisé en ce que le disque de liaison (8) est monté librement sur l'arbre (10).

7) Rotor suivant l'une quelonque des revendications précédentes, caractérisé en ce que les fentes (20) des flasques d'extrémité (4, 6) et du disque intermédiaire (8) sont disposées d'une manière telle que les pâles (2) sont faiblement inclinées en direction longitudinale.

8) Rotor suivant la revendication 7, caractérisé en ce que les bords frontaux et arrières (34, 36) de chaque pâle (2) forment avec un plan axial (A) les traversant, un angle de l'ordre de 1° à 4° et de préférence de 2°.

9) Rotor suivant l'une quelconque des revendications précédentes, caractérisé en ce que les pâles (2) présentent une configuration en arc de cercle simple.

Ebenen, wie insbesondere Fig. 2 zu entnehmen ist.

Zur Verbindung der Stirnscheiben 4, 6 mit der Welle 10 sind die Stirnscheiben 6, 8 mit Naben 12, 14 versehen, die auf der Welle 10 aufgeschrumpft sind. Die Verbindungsscheiben 8 sind durch Schweißen mit Ringnaben 16 verbunden, die sich nur mit Ringbunden auf der Welle 10 radial abstützen, jedoch in Dreh- und Axialrichtung lose auf der Welle aufliegen. Bei dem dargestellten Ausführungsbeispiel sind sieben Verbindungsscheiben 8 vorgesehen.

Wie aus Fig. 3 hervorgeht, sind die Verbindungsscheiben 8 in ihrem Außenbereich mit einer der Schaufelzahl entsprechenden Anzahl von Schlitzen 20 versehen, die zur Aufnahme der Schaufeln 2 entsprechend den Schaufelprofilen ausgebildet sind. Im dargestellten Ausführungsbeispiel haben die Schaufeln 2 die Form einfacher Kreisbogenprofile, was sowohl die Herstellung der Schaufeln 2 wie auch der Schlitze 20 vereinfacht.

Die zwischen den Schlitzen 20 liegenden Zwischenabschnitte 22 der Verbindungsscheiben 8 sind so ausgebildet, daß ihre Außenränder 30 im Bereich der Saugseiten 26 der Schaufeln 2 gegenüber den Außenrändern 28 im Bereich der Druckseiten 24 der Schaufeln 2 radial nach innen versetzt sind. Der Außenumfang der Verbindungsscheiben 8 ist somit nicht kreisförmig ausgebildet; vielmehr sind die Außenränder 28 und 30 jeweils durch eine Gerade 32 miteinander verbunden, die zu einer Tangente am Außenumfang der Zwischenscheibe 8 schräg verläuft.

Durch diesen radialen Versatz der Außenränder 28 und 30 wird erreicht, daß die Schaufeln 2 auf ihrer ganzen Druckseite 24 durch Material der Verbindungsscheibe 8 abgestützt werden, während ein radial äußerer Teil der Saugseiten 26, etwa über 1/4 bis 1/5 der Schaufellänge frei liegt. Hierdurch ergibt sich eine gute Abstützung der Schaufeln, ohne daß enge Spalte zwischen dem Außenumfang der Verbindungsscheiben und den angrenzenden Gehäusewänden (nicht gezeigt) in Kauf genommen werden müssen. Dies ist sowohl für das statische wie auch dynamische Festigkeitsverhalten des Schaufelrades von Vorteil.

Die Schaufeln 2 sind mit den Verbindungsscheiben 8 durch Schweißen verbunden. Aufgrund des radialen Versatzes der Außenränder 28 und 30 sind die Schweißnähte im Eintrittsbereich sowohl auf den Schaufeldruckseiten 24 wie auch auf den Schaufelsaugseiten 26 ohne weiteres zugänglich, so daß sie zur Verringerung des Strömungswiderstandes entsprechend nachbearbeitet werden können. Hierdurch lassen sich die Strömungsverluste verringern.

Wie insbesondere aus Figur 2 hervorgeht, sind die Schaufeln 2 in Längsrichtung geringfügig schräg gestellt, und zwar derart, daß ihre Eintrittskanten 34 und Austrittskanten 36 mit einer sie schneidenden Axialebene A einen Winkel a von ungefähr 2° bis 2,5° einschließen. Diese Schrägstellung der unverwundenen Schaufeln 2 wird durch einen entsprechenden Versatz der Verbindungsscheiben 8 sowie der Stirnscheiben 4, 6 in Umfangsrichtung erreicht.

Aufgrund der beschriebenen Schrägstellung der Schaufeln 2 wird der Strömung in den Schaufelkanälen eine Drallströmung überlagert, so daß sich in sämtlichen Schaufelkanälen das gleiche definierte Strömungsverhalten ergibt. Dies trägt zur Schwingungsstabilisierung des Laufrades bei, und auch Verwirbelungsverluste lassen sich dadurch verringern.

**Patentansprüche**

1. Laufrad für eine Durchströmturbine, das radial von außen nach innen und dann radial von innen nach außen durchströmt wird, mit einem Kranz von profilierten Schaufeln sowie mit zwei endseitigen Stirnscheiben und mindestens einer axial dazwischenliegenden Verbindungsscheibe, die in radialen Ebenen auf einer Welle angeordnet und radial außen mit entsprechend den Schaufelprofilen geformten Schlitzen zur Aufnahme der Schaufeln versehen sind, dadurch gekennzeichnet, daß die zwischen den Schlitzen (20) liegenden Zwischenabschnitte (22) der Verbindungsscheibe (8) an ihren Außenrändern (30) im Bereich der Schaufelsaugseiten (26) gegenüber ihren Außenrändern (28) im Bereich der Schaufeldruckseiten (24) radial nach innen versetzt ausgebildet sind.

2. Laufrad nach Anspruch 1, dadurch gekennzeichnet, daß der radiale Versatz ungefähr 1/3 bis 1/5 der Schaufellänge, vorzugsweise 1/4 der Schaufellänge beträgt.

3. Laufrad nach Anspruch 1 oder 2, dadurch gekennzeichnet, daß sich die Zwischenabschnitte (22) im Bereich der Schaufeldruckseiten (24) radial nach außen bis zu den Eintrittskanten (34) der Schaufeln (2) erstrecken.

4. Laufrad nach einem der vorhergehenden Ansprüche, dadurch gekennzeichnet, daß die Stirnscheiben (4, 6) und die Verbindungsscheibe (8) mit den Schaufeln (2) durch Schweißen verbunden sind.

5. Laufrad nach einem der vorhergehenden Ansprüche, dadurch gekennzeichnet, daß die Stirnscheiben (4, 6) mittels auf der Welle (10) aufgeschrumpfter Naben (12, 14) mit der Welle (10) verbunden sind.

6. Laufrad nach einem der vorhergehenden Ansprüche, dadurch gekennzeichnet, daß die Verbindungsscheibe (8) auf der Welle (10) lose sitzt.

7. Laufrad nach einem der vorhergehenden Ansprüche, dadurch gekennzeichnet, daß die Schlitze (20) der Stirnscheiben (4, 6) und der Verbindungsscheibe (8) so angeordnet sind, daß die Schaufeln (2) in Längsrichtung geringfügig schräg gestellt sind.

# FIG. 1

FIG. 2

FIG. 3